# DEMANDE DE BREVET EUROPEEN

(11) **EP 4 686 111 A1**
(43) Date de publication de la demande: **28.01.2026**
(21) Numéro de dépôt: 25191007.1
(22) Date de dépôt: 22.07.2025
(51) Int. Cl.: H04B 7/06

(54) **PROCEDE DE SELECTION DE FAISCEAU POUR L'ACCES A UN RESEAU SANS FIL**

(30) Priorité: 24.07.2024 FR 2408180
(71) Demandeur: Commissariat à l'Energie Atomique et aux Energies Alternatives, 75015 Paris (FR)
(72) Inventeur: TAHKOUBIT, Khaled, 38054 GRENOBLE CEDEX 09 (FR); CASSIAU, Nicolas, 38054 GRENOBLE CEDEX 09 (FR)
(74) Mandataire: Cabinet Beaumont

(57) **Abrégé**

La présente description concerne un procédé de sélection de faisceaux d'une station de base (BS) vers des équipements utilisateur (UE1, UE2), la station de base (BS) comprenant un réseau d'antennes à sources multiples comprenant des sous-ensembles d'antennes élémentaires, le procédé comprenant les étapes d'émission, par chaque sous-ensemble d'antennes élémentaires à des étapes successives, d'un faisceau, tous les faisceaux ayant la même largeur de faisceau, et, pour chaque sous-ensemble d'antennes élémentaires, tous les faisceaux émis par ledit sous-ensemble d'antennes élémentaires pointant dans des directions différentes entre elles et différentes des directions des premiers faisceaux émis par chaque autre sous-ensemble d'antennes élémentaires ; et de réception par la station de base (BS) d'un signal émis par chaque équipement utilisateur (UE1, UE2) indiquant à quelle étape parmi les premières étapes a été reçu le faisceau de puissance maximale par ledit équipement utilisateur (UE1, UE2).

## Description

### Domaine technique

La présente description concerne de façon générale le domaine des réseaux sans fil, en particulier la phase d'accès initiale d'un équipement utilisateur (UE) au cours de laquelle la station de base de desserte (BS) et l'équipement utilisateur tentent de réaliser un alignement de faisceau.

### Technique antérieure

Certains réseaux sans fil comprennent des réseaux d'antennes situés au niveau des stations de base permettant de former des faisceaux directifs. Cependant, pour que la communication entre la station de base et l'équipement utilisateur soit efficace, les faisceaux au niveau de la station de base doivent être fins (offrant ainsi un gain de puissance suffisant dans les directions de pointage) et correctement alignés.

Le procédé de sélection des faisceaux de la station de base comprend la détermination de l'orientation et de la largeur des faisceaux nécessaires à l'établissement d'un lien physique entre l'équipement utilisateur et la station de base et est essentiel lors de la phase d'accès initial de l'équipement utilisateur à un réseau sans fil.

Il a été proposé d'effectuer un procédé de balayage directionnel exhaustif de l'espace angulaire discrétisé notamment du côté de la station de base, pour tester toutes les directions de faisceau possibles pour les paires station de base-équipement utilisateur, soit de manière aléatoire, soit systématiquement. Ce procédé de sélection par balayage directionnel exhaustif peut conduire à une phase d'accès initial de durée importante.

Ce procédé a été amélioré en émettant d'abord du côté de la station de base dans quelques directions avec un faisceau grande, puis en affinant de manière itérative les caractéristiques du faisceau jusqu'à ce qu'une liaison fort en termes de SNR (rapport signal sur bruit) puisse être établi. Un tel procédé de sélection de faisceau est appelé procédé de sélection par balayage itératif. Toutefois, la durée de la phase d'accès initial peut encore être importante.

En outre, certaines stations de base comprennent des réseaux d'antennes multisource qui sont adaptées à émettre simultanément deux ou plus de deux faisceaux dans des directions différentes, ce qui permet à au moins deux équipements utilisateur de communiquer simultanément avec la station de base. Le procédé de sélection de faisceau doit alors être mis en oeuvre par la station de base pour chaque équipement utilisateur.

### Résumé de l'invention

Un mode de réalisation pallie tout ou partie des inconvénients des procédés connus de sélection de faisceau, notamment pour l'accès à un réseau sans fil.

Un objet d'un mode de réalisation est que le procédé de sélection de faisceaux pour un couple d'équipement utilisateur et de la station de base, notamment lors de la phase initiale d'accès à un réseau sans fil, converge plus rapidement que les procédés connus.

Un mode de réalisation prévoit un procédé de sélection de faisceaux d'une station de base vers des équipements utilisateur, la station de base comprenant un réseau d'antennes à sources multiples comprenant des sous-ensembles d'antennes élémentaires, le procédé comprenant les étapes suivantes :
a) émission, par chaque sous-ensemble d'antennes élémentaires, à des étapes successives, d'un faisceau, tous les faisceaux ayant la même largeur de faisceau, et, pour chaque sous-ensemble d'antennes élémentaires, tous les faisceaux émis par ledit sous-ensemble d'antennes élémentaires pointant dans des directions différentes entre elles et différentes des directions des premiers faisceaux émis par chaque autre sous-ensemble d'antennes élémentaires ; et
b) réception par la station de base d'un signal émis par chaque équipement utilisateur indiquant à quelle étape parmi les premières étapes a été reçu le faisceau de puissance maximale par ledit équipement utilisateur.

Selon un mode de réalisation, les étapes a) et b) sont répétées, la largeur des faisceaux émis à la deuxième occurrence de l'étape a) étant inférieure à la largeur des faisceaux émis à la première occurrence de l'étape a).

Selon un mode de réalisation, à la deuxième occurrence de l'étape a), les faisceaux émis sont inclus dans les faisceaux émis à la première occurrence de l'étape a) et indiqués par les signaux émis par les équipements utilisateur à la première occurrence de l'étape b).

Selon un mode de réalisation, le procédé comprend, après la dernière occurrence de l'étape b), une étape c) d'émission successivement par chaque sous-ensemble d'antennes élémentaires de faisceaux ayant la même largeur de faisceau, et, pour chaque sous-ensemble d'antennes élémentaires, tous les faisceaux émis par ledit sous-ensemble d'antennes élémentaires pointant dans des directions différentes entre elles et différentes des directions des faisceaux émis par chaque autre sous-ensemble d'antennes élémentaires.

Selon un mode de réalisation, la largeur des faisceaux émis l'étape c) est inférieure à la largeur des faisceaux émis à la dernière occurrence de l'étape a).

Selon un mode de réalisation, à l'étape c), les faisceaux émis sont inclus dans les faisceaux émis à la dernière occurrence de l'étape a) et indiqués par les signaux émis par les équipements utilisateur à la dernière occurrence de l'étape b).

Selon un mode de réalisation, le procédé comprend les étapes suivantes :
- émission, par chaque sous-ensemble d'antennes élémentaires, à chaque première étape d'une succession de premières étapes, d'un premier faisceau pointant dans une première direction et ayant une première largeur de faisceau, tous les premiers faisceaux ayant la même première largeur de faisceau, et, pour chaque sous-ensemble d'antennes élémentaires, tous les premiers faisceaux émis par ledit sous-ensemble d'antennes élémentaires pointant dans des premières directions différentes entre elles et différentes des premières directions des premiers faisceaux émis par chaque autre sous-ensemble d'antennes élémentaires ;
- réception par la station de base d'un premier signal émis par chaque équipement utilisateur indiquant à quelle première étape, appelé première étape de maximum, parmi les premières étapes a été reçu le premier faisceau de puissance maximale par ledit équipement utilisateur ;
- émission, par chaque sous-ensemble d'antennes élémentaires, à chaque deuxième étape d'une succession de deuxièmes étapes, d'un deuxième faisceau pointant dans une deuxième direction et ayant une deuxième largeur de faisceau inférieure à la première largeur de faisceau, tous les deuxièmes faisceaux ayant la même deuxième largeur de faisceau, et, pour chaque sous-ensemble d'antennes élémentaires, tous les deuxièmes faisceaux émis par ledit sous-ensemble d'antennes élémentaires étant inclus dans les premiers faisceaux émis aux premières étapes de maximum, pointant selon des deuxièmes directions différentes entre elles et différentes des deuxièmes directions des deuxièmes faisceaux émis par chaque autre sous-ensemble d'antennes élémentaires ; et
- réception par la station de base d'un deuxième signal émis par chaque équipement utilisateur indiquant à quelle deuxième étape, appelée deuxième étape de maximum, parmi les deuxièmes étapes a été reçu le deuxième faisceau de puissance maximale par ledit équipement utilisateur.

Selon un mode de réalisation, le procédé comprend en outre les étapes suivantes :
- émission, successivement pour chaque deuxième faisceau émis aux troisièmes étapes de maximum, par le sous-ensemble d'antennes élémentaires ayant émis ledit deuxième faisceau, à chaque troisième étape d'une succession de troisièmes étapes, de troisièmes faisceaux pointant dans des troisièmes directions et ayant une troisième largeur de faisceau inférieure à la deuxième largeur de faisceau, tous les troisièmes faisceaux ayant la même troisième largeur de faisceau, et tous les troisièmes faisceaux émis par ledit sous-ensemble d'antennes élémentaires étant inclus dans ledit deuxième faisceau, les troisièmes faisceaux pointant selon des troisièmes directions différentes entre elles et différentes des troisièmes directions des troisièmes faisceaux émis par chaque autre sous-ensemble d'antennes élémentaires ;et
- réception par la station de base d'un troisième signal émis par chaque équipement utilisateur indiquant à quelle troisième étape, appelée troisième étape de maximum, parmi les troisièmes étapes a été reçu le troisième faisceau de puissance maximale par ledit équipement utilisateur.

Un mode de réalisation prévoit également une station de base comprenant un réseau d'antennes à sources multiples comprenant des sous-ensembles d'antennes élémentaires, la station de base étant configurée pour mettre en oeuvre un procédé de sélection de faisceaux vers des équipements utilisateur comprenant la répétition des étapes suivantes :
- émission, par chaque sous-ensemble d'antennes élémentaires, à des étapes successives, d'un faisceau, tous les faisceaux ayant la même largeur de faisceau, et, pour chaque sous-ensemble d'antennes élémentaires, tous les faisceaux émis par ledit sous-ensemble d'antennes élémentaires pointant dans des directions différentes entre elles et différentes des directions des premiers faisceaux émis par chaque autre sous-ensemble d'antennes élémentaires ; et
- réception d'un signal de chaque équipement utilisateur indiquant à quelle étape parmi les premières étapes a été reçu le faisceau de puissance maximale par ledit équipement utilisateur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon partielle et schématique, une station de base comprenant un réseau d'antennes multi-source ;
la figure 2 illustre schématiquement les positions d'une station de base et de deux équipements utilisateur dans un réseau sans fil ;
la figure 3 représente, de façon schématique, des faisceaux pouvant être émis par deux sous-ensembles d'antennes élémentaires d'un réseau d'antennes ;
la figure 5, la figure 6, et la figure 7 représente, de façon schématique, des faisceaux émis par les deux sous-ensembles d'antennes élémentaires du réseau d'antennes de la figure 3 à des étapes successives d'un mode de réalisation d'un procédé de sélection de faisceau ;
la figure 8, la figure 9, la figure 10, la figure 11, la figure 12, et la figure 13, obtenues par simulation, représentent la puissance électromagnétique reçue par deux équipements utilisateur à des étapes successives du mode de réalisation du procédé de sélection de faisceau illustré sur la figure 4, la figure 5, et la figure 6 ;
la figure 14 et la figure 15, obtenues par simulation, représentent la puissance électromagnétique reçue par deux équipements utilisateur lorsque la station de base met en oeuvre un procédé de sélection de faisceaux directionnel exhaustif ; et

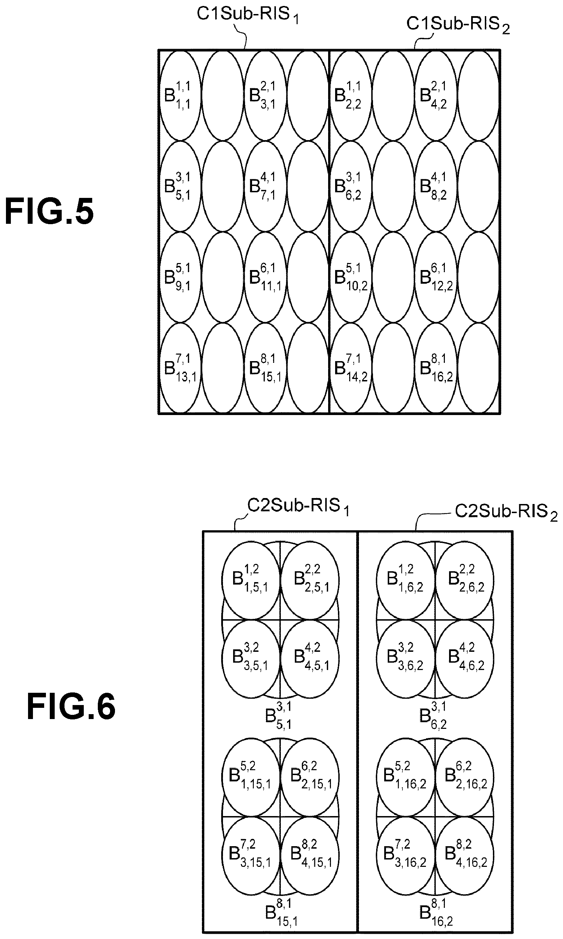

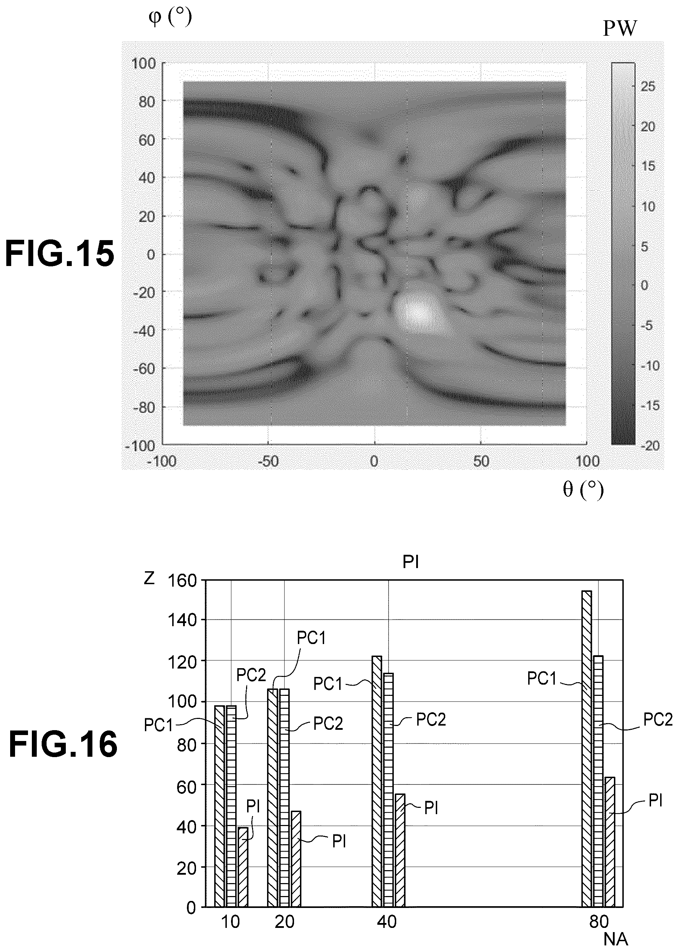

la figure 16, la figure 17, et la figure 18 représentent chacune le nombre d'étapes nécessaires lors de la mise en oeuvre du procédé de sélection de faisceaux selon le mode de réalisation illustré sur la figure 5, la figure 6, et la figure 7, d'un procédé de sélection par balayage directionnel exhaustif et d'un procédé de sélection par balayage itératif pour un réseau d'antennes à sources multiples comprenant respectivement deux, quatre, et huit sous-ensembles d'antennes élémentaires en fonction de la racine carrée du nombre d'antennes élémentaires de chaque sous-ensemble d'antennes élémentaires.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures dans une position normale d'utilisation.

Sauf précision contraire, les expressions "environ", "approximativement", "sensiblement", et "de l'ordre de" signifient à 10 % ou à 10° près, de préférence à 5 % ou à 5° près.

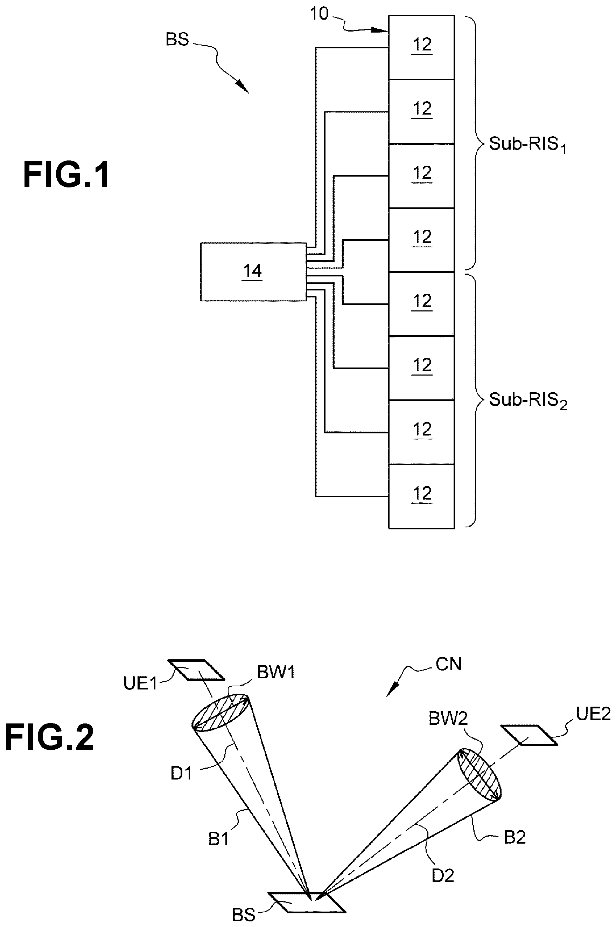

La figure 1 représente une station de base BS d'un réseau sans fil, comprenant un réseau d'antennes à sources multiples 10, également appelé réseau d'antennes multi-source.

Le réseau d'antennes à sources multiples 10 comprend un ensemble d'antennes élémentaires 12. La station de base BS comprend en outre un circuit électronique de commande 14 configuré pour commander chaque antenne élémentaire 12 du réseau d'antennes 10.

Selon un mode de réalisation, le circuit électronique 14 est configuré pour répartir l'ensemble des antennes élémentaires 12 du réseau d'antennes 10 en M sous-ensembles Sub-RISⱼ d'antennes élémentaires 12, où j est un nombre entier compris dans la plage allant de 1 à M, et où M est un nombre entier supérieure ou égal à 2. Le nombre M dépend notamment du nombre d'antennes élémentaires 12. Le nombre M correspond au nombre d'équipements utilisateur, non représentés en figure 1, avec lesquels la station de base doit établir une communication sans fil. A titre d'exemple, sur la figure 1, M est égal à 2, le réseau d'antennes 10 comprend deux sous-ensembles Sub-RIS₁ et Sub-RIS₂ d'antennes élémentaires 12. Chaque sous-ensemble Sub-RISⱼ d'antennes élémentaires 12 comprend un nombre NA*NA d'antennes élémentaires 12. Le circuit électronique de commande 14 est configuré pour commander indépendamment chaque sous-ensemble Sub-RISⱼ d'antennes élémentaires 12 pour émettre chacun un faisceau d'ondes électromagnétiques pointant dans une direction donnée, les directions de pointage des faisceaux émis par les sous-ensembles Sub-RISⱼ d'antennes élémentaires 12 pouvant être différentes. Selon un mode de réalisation, le réseau d'antennes 10 est réalisée selon une technologie de surfaces intelligentes reconfigurables (RIS, sigle anglais pour Reconfigurable Intelligent Surfaces). La plage de fréquences des ondes électromagnétiques des faisceaux dépend des applications visées. Selon un mode de réalisation, la plage de fréquences des ondes électromagnétiques des faisceaux correspond par exemple aux bandes de fréquence de la norme de réseau de téléphonie mobile de cinquième génération (5G), par exemple la bande de fréquences de 600 MHz à 900 MHz, la bande de fréquences de 1,7 GHz à 4,7 GHz, notamment la bande 3,5 GHz (3,4 GHz- 3,8 GHz), ou la bande de fréquences de 24 GHz à 47 GHz, notamment la bande 26 GHz (24,25 GHz - 27,5 GHz).

La figure 2 représente très schématiquement une station de base BS et deux équipements utilisateur UE1, UE2 au sein d'un réseau cellulaire CN, la station de base BS ayant la structure représentée en figure 1. En figure 2, on a représenté un faisceau B₁ émis par le sous-ensemble Sub-RIS₁ de la station de base BS et dirigé vers l'équipement utilisateur UE1 et un faisceau B₂ émis simultanément par le sous-ensemble Sub-RIS₂ de la station de base 1 et dirigé vers l'équipement utilisateur UE2. A chaque faisceau B₁, B₂ correspond une direction D1, D2 du faisceau et une largeur de faisceau BW₁, BW₂ du faisceau.

Selon un mode de réalisation, chaque sous-ensemble Sub-RISⱼ d'antennes élémentaires 12 peut émettre des faisceaux avec des ouvertures angulaires différentes. A titre d'exemple, chaque sous-ensemble Sub-RISⱼ d'antennes élémentaires 12 peut émettre des faisceaux à largeur de faisceau grande, moyenne, ou petite.

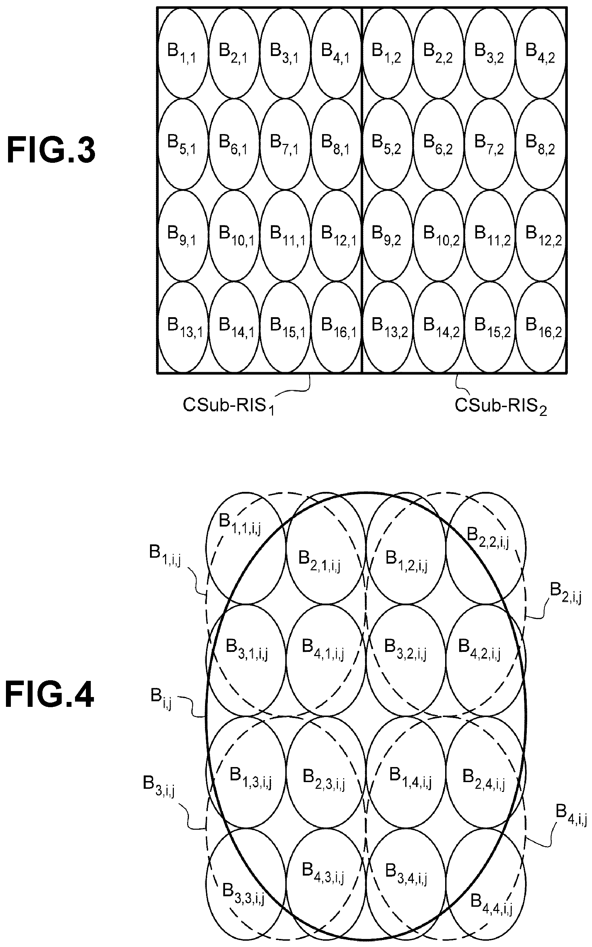

La figure 3 représente, de façon schématique, une carte CSub-RIS₁ des faisceaux à largeur de faisceau grande pouvant être émis le premier sous-ensemble Sub-RIS₁ d'antennes élémentaires du réseau d'antennes 10, et une carte CSub-RIS₂ des faisceaux à largeur de faisceau grande pouvant être émis le deuxième sous-ensemble Sub-RIS₂ d'antennes élémentaires du réseau d'antennes 10. Chaque faisceau est désigné par la référence B_{i,j}, où i est un nombre entier compris dans la plage allant de 1 à N, et où j est un nombre entier compris dans la plage allant de 1 à M, M étant le nombre de sous-ensembles qui est, à titre d'exemple, égal à 2 en figure 3. Le nombre entier N correspond au nombre total de faisceaux pouvant être émis par chaque sous-ensemble Sub-RIS_1, Sub-RIS_2 d'antennes élémentaires. Le nombre N dépend notamment du nombre NA. A titre d'exemple, sur la figure 3, N est égal à 16. Pour chaque sous-ensemble Sub-RISⱼ, j compris dans la plage allant de 1 à M, chaque faisceau B_{i,j} pointe dans une direction différente de celles des autres faisceaux B_{k,j} où k est un nombre entier différent de i. Les faisceaux B_{i,1} à B_{i,M} pointent dans la même direction. Pour chaque sous-ensemble Sub-RISⱼ, j compris dans la plage allant de 1 à M, les N faisceaux B_{1,j} à B_{N,j} couvre la totalité de la portion de l'espace dans laquelle est susceptible d'émettre la station de base. Il s'agit par exemple d'un secteur angulaire avec un azimut compris dans la plage allant de -60 ° à 60 ° et une élévation comprise dans la plage allant de -60 ° à 60 °. A des fins d'illustration, les N faisceaux B_{1,j} à E_{N,j} sont représentés jointifs. En réalité, chaque faisceau B_{i,j} est partiellement superposé avec les faisceaux voisins pour couvrir la totalité de la portion de l'espace dans laquelle est susceptible d'émettre la station de base.

La figure 4 illustre la formation de faisceaux ayant des ouvertures angulaires différentes par l'un des sous-ensembles Sub-RISⱼ d'antennes élémentaires 12. Pour chaque faisceau à largeur de faisceau grande B_{i,j} (illustré de façon schématique par un ovale en trait continu épais en figure 4), où i est un nombre entier compris dans la plage allant de 1 à N, et où j est un nombre entier compris dans la plage allant de 1 à M, les antennes élémentaires 12 du sous-ensemble Sub-RISⱼ peuvent être commandées par le circuit de commande 14 pour émettre un nombre entier O de faisceaux à largeur de faisceau moyenne B_{r,i,j} (illustrés de façon schématique par des ovales en traits pointillés en figure 4), où r est un nombre entier compris dans la plage allant de 1 à O, ayant chacun une largeur de faisceau plus petite que la largeur de faisceau grande du faisceau B_{i,j}, les faisceaux B_{1,i,j} à B_{o,i,j} étant sensiblement contenus dans le faisceau B_{i,j}. Selon un mode de réalisation, la largeur de faisceau du faisceaux B_{r,i,j} est sensiblement divisée par deux en azimut et par deux en élévation par rapport à la largeur de faisceau du faisceau B_{i,j}, de sorte que le nombre O est égal à 4. De façon analogue, pour chaque faisceau à largeur de faisceau moyenne B_{r,i,j}, où i est un nombre entier compris dans la plage allant de 1 à N, où j est un nombre entier compris dans la plage allant de 1 à M, et où r est un nombre entier compris dans la plage allant de 1 à O, les antennes élémentaires 12 du sous-ensemble Sub-RISⱼ peuvent être commandées par le circuit de commande 14 pour émettre un nombre P de faisceaux à largeur de faisceau petite B_{s,r,i,j} (illustrés de façon schématique par des ovales en traits continus épais), où s est un nombre entier compris dans la plage allant de 1 à P, ayant chacun une largeur de faisceau plus petite que la largeur de faisceau moyenne du faisceau B_{r,i,j}, les faisceaux E_{1,r,i,j} à B_{P,r,i,j} étant sensiblement contenus dans le faisceau B_{r,i,j}. Selon un mode de réalisation, la largeur de faisceau du faisceau B_{s,r,i,j} est sensiblement divisée par deux en azimut et par deux en élévation par rapport à la largeur de faisceau du faisceau B_{r,i,j}, de sorte que P est égal à 4. De façon analogue à ce qui a été indiqué précédemment, à des fins d'illustration, les O faisceaux à largeur de faisceau moyenne B_{1,i,j} à E_{o,i,j} sont représentés jointifs. En réalité, chaque faisceau à largeur de faisceau moyenne B_{r,i,j} est partiellement superposé avec les faisceaux à largeur de faisceau moyenne voisins pour couvrir la totalité du faisceau à largeur de faisceau grande B_{i,j}. En outre, les P faisceaux à largeur de faisceau petite E_{1,r,i,j} à B_{P,r,i,j} sont représentés jointifs. En réalité, chaque faisceau à largeur de faisceau petite B_{s,r,i,j} est partiellement superposé avec les faisceaux à largeur de faisceau petite voisins pour couvrir la totalité du faisceau à largeur de faisceau moyenne B_{r,i,j}. Chaque sous-ensemble Sub-RISⱼ peut donc émettre N faisceaux différents à largeur de faisceau importante, N*P faisceaux différents à largeur de faisceau moyenne, et N*P*O faisceaux différents à largeur de faisceau petite.

Selon un mode de réalisation, le circuit de commande 14 établit un livre de codes qui dépend du nombre d'équipements utilisateur devant communiquer avec la station de base BS. Le livre de codes comprend les commandes à appliquer aux antennes élémentaires 12 pour que chaque sous-ensemble Sub-RISⱼ d'antennes élémentaires 12 puisse émettre les N faisceaux à largeur grande, les N*P faisceaux à de faisceau moyenne, et les N*P*O faisceaux différents à largeur de faisceau petite. Le nombre N*P*O de faisceaux différents à largeur de faisceau petite que peut émettre chaque sous-ensemble Sub-RISⱼ d'antennes élémentaires 12 dépend notamment du nombre NA et peut être égal au nombre NA élevé au carré. Le nombre M de sous-ensembles Sub-RISⱼ d'antennes élémentaires 12 et donc le nombre NA peut être modifié par le circuit de commande 14 en fonction du nombre d'équipements utilisateur cherchant à accéder à une communication sans fil avec la station de base.

Le présent mode de réalisation comprend un nombre Q de phases de balayage. Chaque phase de balayage comprend un nombre Z d'étapes successives, et pendant chaque étape, chaque sous-ensemble Sub-RISⱼ d'antennes élémentaires 12 de la station de base émet un faisceau. Selon un mode de réalisation, pour chaque phase de balayage, et pour chaque étape de la phase de balayage, le faisceau émis par chaque sous-ensemble Sub-RISⱼ d'antennes élémentaires 12 pendant chaque étape est différent des faisceaux émis pendant toutes les autres étapes par tous les sous-ensembles Sub-RISⱼ. Dans la suite de la description, on ajoute à la référence du faisceau un exposant u,v, où u est un nombre entier compris dans la plage allant de 1 à Z et v est un nombre entier compris dans la plage allant de 1 à Q. Selon un mode de réalisation, pour chaque phase de balayage, et pour chaque sous-ensemble Sub-RISⱼ d'antennes élémentaires 12, tous les faisceaux émis pendant les étapes de la phase de balayage ont la même largeur de faisceau. Selon un mode de réalisation, pour chaque phase de balayage, tous les faisceaux émis pendant les étapes de la phase de balayage par le sous-ensemble Sub-RISⱼ d'antennes élémentaires 12 sont différents des faisceaux émis pendant les étapes de la phase de balayage par les autres sous-ensembles Sub-RIS_{w} d'antennes élémentaires 12 où w est différent de j.

Selon un mode de réalisation, à la fin de chaque phase de balayage, chaque équipement utilisateur transmet un message à la station de base lui indiquant à quelle étape de la phase de balayage il a reçu le faisceau ayant la puissance maximale. Le faisceau de puissance maximale correspond au faisceau émis par la station de base dont la direction pointe le plus vers la position de l'équipement utilisateur. L'équipement utilisateur ne connaît pas quel est le sous-ensemble Sub-RISⱼ d'antennes élémentaires 12 qui a émis le faisceau reçu de puissance maximale et c'est pourquoi il n'indique que l'étape de la phase de balayage il a reçu le faisceau ayant la puissance maximale. La station de base détermine, pour chaque étape à laquelle l'un des équipements utilisateur a indiqué avoir reçu un faisceau de puissance maximale, quel faisceau a été émis par chaque sous-ensemble Sub-RISⱼ d'antennes élémentaires 12.

Selon un mode de réalisation, à la première phase de balayage du procédé, chaque sous-ensemble Sub-RISⱼ d'antennes élémentaires 12 de la station de base émet, pendant chaque étape de la première phase de balayage, un faisceau à largeur de faisceau grande B_{i,j}^{u,1}. Tous les faisceaux à largeur de faisceau grande B_{i,j}^{1,1} à B_{i,j}^{z,1} émis pendant les Z étapes de la première phase de balayage par le sous-ensemble Sub-RISⱼ d'antennes élémentaires 12 sont différents des faisceaux à largeur de faisceau grande émis pendant les étapes de la première phase de balayage par les autres sous-ensembles Sub-RIS_{w} d'antennes élémentaires 12 où w est différent de j. Chaque faisceaux à largeur de faisceau grande B_{i,j}^{1,1} à B_{i,j}^{z,1} est donc transmis une seule fois pendant la première phase de balayage par l'un des sous-ensembles Sub-RISⱼ d'antennes élémentaires 12. A chaque étape de la première phase de balayage, les M sous-ensembles Sub-RISⱼ d'antennes élémentaires 12 émettent donc simultanément des faisceaux à largeur de faisceau grande.

A la fin de la première phase de balayage, chaque équipement utilisateur indique à la station de base à quelle étape, appelée étape de maximum, il a reçu le faisceau à largeur de faisceau grande de puissance maximale. La station de base détermine, pour chaque étape de maximum, quel faisceau à largeur de faisceau grande a été émis par chaque sous-ensemble Sub-RISⱼ d'antennes élémentaires 12.

A la deuxième phase de balayage, successivement pour chaque étape de maximum déterminée à la première phase de balayage, chaque sous-ensemble Sub-RISⱼ d'antennes élémentaires 12 émet successivement les P faisceaux à largeur de faisceau moyenne contenus dans le faisceau à largeur de faisceau grande ayant été émis à l'étape de maximum déterminée à la première phase de balayage. A chaque étape de la deuxième phase de balayage, les M sous-ensembles Sub-RISⱼ d'antennes élémentaires 12 émettent donc simultanément des faisceaux à largeur de faisceau moyenne.

A la fin de la deuxième phase de balayage, chaque équipement utilisateur indique à la station de base à quelle étape, appelée étape de maximum, il a reçu le faisceau à largeur de faisceau moyenne de puissance maximale. La station de base détermine, pour chaque étape de maximum, quel faisceau à largeur de faisceau moyenne qu'il avait émis par chaque sous-ensemble Sub-RISⱼ d'antennes élémentaires 12.

A la troisième phase de balayage, successivement pour chaque étape de maximum déterminée à la deuxième phase de balayage, chaque sous-ensemble Sub-RISⱼ d'antennes élémentaires 12 émet successivement les O faisceaux à largeur de faisceau petite contenus dans le faisceau à largeur de faisceau moyenne qu'il avait émis à l'étape de maximum déterminée à la deuxième phase de balayage. A chaque étape de la troisième phase de balayage, un seul faisceau à largeur petite est donc émis par l'un des sous-ensembles Sub-RISⱼ d'antennes élémentaires 12.

A la fin de la troisième phase de balayage, chaque équipement utilisateur indique à la station de base à quelle étape il a reçu le faisceau à largeur de faisceau petite de puissance maximale. La station de base détermine, pour chaque étape à laquelle l'un des équipements utilisateur a indiqué avoir reçu un faisceau de puissance maximale, quel faisceau à largeur de faisceau petite a été émis par chaque sous-ensemble Sub-RISⱼ d'antennes élémentaires 12. Il s'agit du faisceau à largeur de faisceau petite pointant vers l'équipement utilisateur est qui pourra être utilisé par l'un des sous-ensembles Sub-RISⱼ d'antennes élémentaires 12 pour communiquer avec l'équipement utilisateur par la suite.

Le procédé peut comprendre des phases de balayage supplémentaires lorsque des faisceaux à largeur de faisceau inférieure à la largeur de faisceau petite peuvent être émis par les sous-ensemble Sub-RISⱼ d'antennes élémentaires 12.

Les figures 5 à 7 illustrent des phases de balayage successives d'un mode de réalisation d'un procédé de sélection de faisceau pour l'accès à un réseau sans fil.

La figure 5 illustre une carte C1Sub-RIS₁ des faisceaux à largeur de faisceau grande émis le premier sous-ensemble Sub-RIS₁ d'antennes élémentaires du réseau d'antennes 10, et une carte C1Sub-RIS₂ des faisceaux à largeur de faisceau grande émis le deuxième sous-ensemble Sub-RIS₂ d'antennes élémentaires du réseau d'antennes 10 à la première phase de balayage du procédé dans lequel le nombre M de sous-ensemble d'antennes élémentaires est égal à 2, le nombre N de faisceaux à largeur de faisceau grande par sous-ensemble d'antennes élémentaires est égal à 16, et le nombre Z d'étapes est égal à 8. Ceci signifie que, pendant la première phase de balayage, les premier et deuxième sous-ensembles Sub-RIS₁ et Sub-RIS₂ d'antennes élémentaires 12 émettent chacun successivement 8 faisceaux à largeur de faisceau grande. On suppose qu'il y a deux équipements utilisateur souhaitant communiquer avec la station de base.

En figure 5, les faisceaux à largeur de faisceau grande qui ne sont pas émis par chaque sous-ensemble Sub-RIS₁ et Sub-RIS₂ d'antennes élémentaires 12 sont représentés par des ovales noirs. Le premier sous-ensemble Sub-RIS₁ émet successivement les faisceaux à largeur de faisceau grande B_{1,1}^{1,1}, B_{3,1}^{2,1}, E_{5,1}^{3,1}, B_{7,1}^{4,1}, B_{9,1}^{5,1}, B_{11,1}^{6,1}, E_{13,1}^{7,1}, et B_{15,1}^{8,1}, et le deuxième sous-ensemble Sub-RIS₂ émet successivement les faisceaux à largeur de faisceau grande B_{2,2}^{1,1}, B_{4,2}^{2,1}, B_{6,2}^{3,1}, B_{8,2}^{4,1}, E_{10,2}^{5,1}, B_{12,2}^{6,1}, E_{14,2}^{7,1}, et E_{16,2}^{8,1}.

A titre d'exemple, on suppose que le faisceau de puissance maximale reçu par le premier équipement utilisateur est le faisceau B_{5,1}^{3,1} émis par le premier sous-ensemble Sub-RIS₁ d'antennes élémentaires 12, et que le faisceau de puissance maximale reçu par le deuxième équipement utilisateur est le faisceau E_{16,2}^{8,1} émis par le deuxième sous-ensemble Sub-RIS₂ d'antennes élémentaires 12. A la fin de la première phase de balayage, le premier équipement utilisateur transmet un message à la station de base lui indiquant que le faisceau ayant la puissance maximale a été reçu à la troisième étape et le deuxième équipement utilisateur transmet un message à la station de base lui indiquant que le faisceau ayant la puissance maximale a été reçu à la huitième étape. Pour la troisième étape, il y a donc une indétermination entre le faisceau B_{5,1}^{3,1} émis par le premier sous-ensemble Sub-RIS₁ d'antennes élémentaires 12 et le faisceau B_{6,2}^{3,1} émis par le deuxième sous-ensemble Sub-RIS₂ d'antennes élémentaires 12. Pour la huitième étape, il y a donc une indétermination entre le faisceau E_{15,1}^{8,1} émis par le premier sous-ensemble Sub-RIS₁ d'antennes élémentaires 12 et le faisceau E_{16,2}^{8,1} émis par le deuxième sous-ensemble Sub-RIS₂ d'antennes élémentaires 12.

La figure 6 illustre une carte C2Sub-RIS₁ des faisceaux à largeur de faisceau moyenne émis le premier sous-ensemble Sub-RIS₁ d'antennes élémentaires du réseau d'antennes 10, et une carte C2Sub-RIS₂ des faisceaux à largeur de faisceau moyenne émis le deuxième sous-ensemble Sub-RIS₂ d'antennes élémentaires du réseau d'antennes 10 à la deuxième phase de balayage du procédé, dans lequel le nombre O de faisceaux à largeur de faisceau moyenne par faisceau à largeur de faisceau grande est égal à 4. Ceci signifie que, pendant la deuxième phase de balayage, les premier et deuxième sous-ensembles Sub-RIS₁ et Sub-RIS₂ d'antennes élémentaires 12 émettent chacun successivement 8 faisceaux à largeur de faisceau moyenne. Le premier sous-ensemble Sub-RIS₁ émet successivement les quatre faisceaux à largeur de faisceau moyenne couvrant le faisceau à largeur de faisceau grande B_{5,1}^{3,1} puis les quatre faisceaux à largeur de faisceau moyenne couvrant le faisceau à largeur de faisceau grande E_{15,1}^{8,1}. Le deuxième sous-ensemble Sub-RIS₂ émet successivement les quatre faisceaux à largeur de faisceau moyenne couvrant le faisceau à largeur de faisceau grande B_{6,2}^{3,1} puis les quatre faisceaux à largeur de faisceau moyenne couvrant le faisceau à largeur de faisceau grande E_{16,2}^{8,1}. Plus précisément, le premier sous-ensemble Sub-RIS₁ émet successivement les faisceaux à largeur de faisceau moyenne B_{1,5,1}^{1,2}, B_{2,5,1}^{2,2}, B_{3,5,1}^{3,2}, B_{4,5,1}^{4,2}, E_{1,15,1}^{5,2}, B_{2,15,1}^{6,2}, B_{2,15,1}^{7,2}, et B_{4,15,1}^{8,2}, et le deuxième sous-ensemble Sub-RIS₂ émet successivement les faisceaux à largeur de faisceau moyenne B_{1,6,2}^{1,2}, B_{2,6,2}^{2,2}, B_{3,6,2}^{3,2}, E_{4,6,2}^{4,2}, B_{1,16,2}^{5,2}, B_{2,16,2}^{6,2}, B_{3,16,2}^{7,2}, et B_{4,16,2}^{8,2}.

A titre d'exemple, on suppose que le faisceau de puissance maximale reçu par le premier équipement utilisateur est le faisceau B_{1,5,1}^{1,2} émis par le premier sous-ensemble Sub-RIS₁ d'antennes élémentaires 12, et que le faisceau de puissance maximale reçu par le deuxième équipement utilisateur est le faisceau E_{2,6,2}^{6,2} émis par le deuxième sous-ensemble Sub-RIS₂ d'antennes élémentaires 12. A la fin de la deuxième phase de balayage, le premier équipement utilisateur transmet un message à la station de base lui indiquant que le faisceau à largeur de faisceau moyenne ayant la puissance maximale a été reçu à la première étape et le deuxième équipement utilisateur transmet un message à la station de base lui indiquant que le faisceau à largeur de faisceau moyenne ayant la puissance maximale a été reçu à la sixième étape. Pour la première étape, il y a donc une indétermination entre le faisceau B_{1,5,1}^{1,2} émis par le premier sous-ensemble Sub-RIS₁ d'antennes élémentaires 12 et le faisceau B_{1,6,2}^{1,2} émis par le deuxième sous-ensemble Sub-RIS₂ d'antennes élémentaires 12. Pour la sixième étape, il y a donc une indétermination entre le faisceau B_{2,15,2}^{6,2} émis par le premier sous-ensemble Sub-RIS₁ d'antennes élémentaires 12 et le faisceau B_{2,6,2}^{6,2} émis par le deuxième sous-ensemble Sub-RIS₂ d'antennes élémentaires 12.

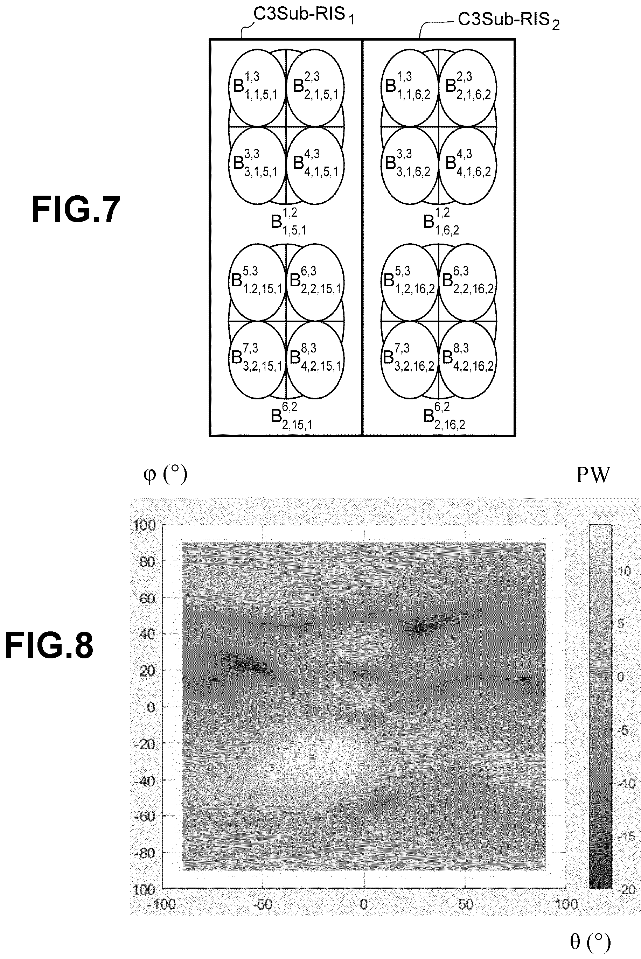

La figure 7 illustre une carte C3Sub-RIS₁ des faisceaux à largeur de faisceau petite émis le premier sous-ensemble Sub-RIS₁ d'antennes élémentaires du réseau d'antennes 10, et une carte C3Sub-RIS₂ des faisceaux à largeur de faisceau petite émis le deuxième sous-ensemble Sub-RIS₂ d'antennes élémentaires du réseau d'antennes 10 à la troisième phase de balayage du mode de réalisation du procédé, dans lequel le nombre P de faisceaux à largeur de faisceau petite par faisceau à largeur de faisceau moyenne est égal à 4. Ceci signifie que, pendant la troisième phase de balayage, les premier et deuxième sous-ensembles Sub-RIS₁ et Sub-RIS₂ d'antennes élémentaires 12 émettent chacun successivement 8 faisceaux à largeur de faisceau petite. Le premier sous-ensemble Sub-RIS₁ émet successivement les quatre faisceaux à largeur de faisceau petite couvrant le faisceau à largeur de faisceau moyenne B_{1,5,1}^{1,2}. Ensuite, le deuxième sous-ensemble Sub-RIS₂ émet successivement les quatre faisceaux à largeur de faisceau petite couvrant le faisceau à largeur de faisceau moyenne B_{1,6,2}^{1,2}. Ensuite, le premier sous-ensemble Sub-RIS₁ émet successivement les quatre faisceaux à largeur de faisceau petite couvrant le faisceau à largeur de faisceau moyenne E_{2,15,1}^{6,2}. Ensuite, le deuxième sous-ensemble Sub-RIS₂ émet successivement les quatre faisceaux à largeur de faisceau moyenne couvrant le faisceau à largeur de faisceau grande E_{2,16,2}^{6,2}. Plus précisément, le premier sous-ensemble Sub-RIS₁ émet successivement les faisceaux à largeur de faisceau petite B_{1,1,5,1}^{1,3}, E_{2,1,5,1}^{2,3}, E_{3,1,5,1}^{3,3}, et E_{4,1,5,1}^{4,3}, puis le deuxième sous-ensemble Sub-RIS₂ émet successivement les faisceaux à largeur de faisceau petite E_{1,1,6,2}^{1,3}, B_{2,1,6,2}^{2,3}, B_{3,1,6,2}^{3,3}, et B_{4,1,6,2}^{4,3}, puis le premier sous-ensemble Sub-RIS₁ émet successivement les faisceaux à largeur de faisceau petite B_{1,2,15,1}^{5,3}, B_{2,2,15,1}^{6,3}, B_{3,2,15,1}^{7,3}, et B_{4,2,15,1}^{8,3}, et enfin le deuxième sous-ensemble Sub-RIS₂ émet successivement les faisceaux à largeur de faisceau petite E_{1,1,16,2}^{5,3}, E_{2,1,16,2}^{6,3}, B_{3,1,16,2}^{7,3}, et B_{4,1,16,2}^{8,3}.

A la fin de la troisième phase de balayage, le premier équipement utilisateur transmet un message à la station de base lui indiquant à quelle étape le faisceau à largeur de faisceau petite ayant la puissance maximale a été reçu et le deuxième équipement utilisateur transmet un message à la station de base lui indiquant à quelle étape le faisceau à largeur de faisceau petite ayant la puissance maximale a été reçu à la sixième étape. La station de base peut ainsi déterminer quel faisceau à largeur de faisceau petite pointe vers le premier équipement utilisateur et qui sera utilisé dans la suite de la communication avec l'un du premier équipement utilisateur par l'un du premier sous-ensemble Sub-RIS₁ et du deuxième sous-ensemble Sub-RIS₂ et quel faisceau à largeur de faisceau petite pointe vers le deuxième équipement utilisateur et qui sera utilisé dans la suite de la communication avec le deuxième équipement utilisateur par l'autre du premier sous-ensemble Sub-RIS₁ et du deuxième sous-ensemble Sub-RIS₂.

La figure 8, la figure 9, la figure 10, la figure 11, la figure 12, et la figure 13, obtenues par simulation, représentent la puissance électromagnétique PW, exprimée en watts (W) reçue par les équipements utilisateur en fonction de l'azimut (θ en abscisses) et de l'élévation (φ en ordonnées) à des phases de balayage successives du mode de réalisation du procédé de sélection de faisceaux illustré sur la figure 5, la figure 6, et la figure 7. Pour les figures 8 à 13, la station de base est située à une position de coordonnées (0,0,5) dans un repère orthonormée. Le premier équipement utilisateur est située à une position de coordonnées (5,-5,1.2) dans le repère orthonormée. Le deuxième équipement utilisateur est située à une position de coordonnées (5,3,1) dans le repère orthonormée. Chaque sous-ensemble Sub-RISⱼ comprend 200 antennes élémentaires 12.

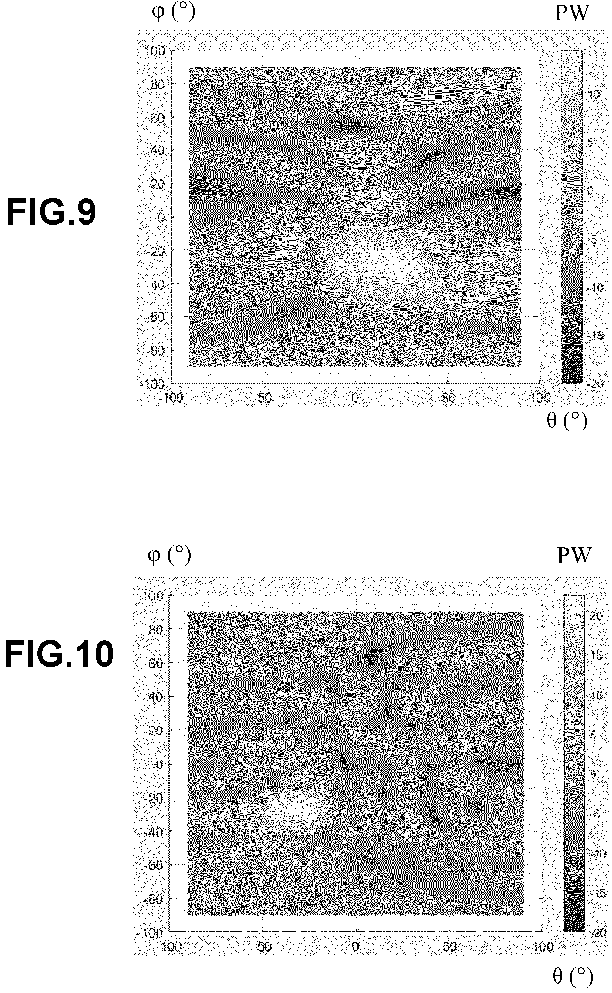

La figure 8 et la figure 9, obtenues par simulation, représentent la puissance électromagnétique reçue par le premier équipement utilisateur (figure 8) et par le deuxième équipement utilisateur (figure 9) à la première phase de balayage du mode de réalisation du procédé de sélection de faisceaux illustré sur la figure 5.

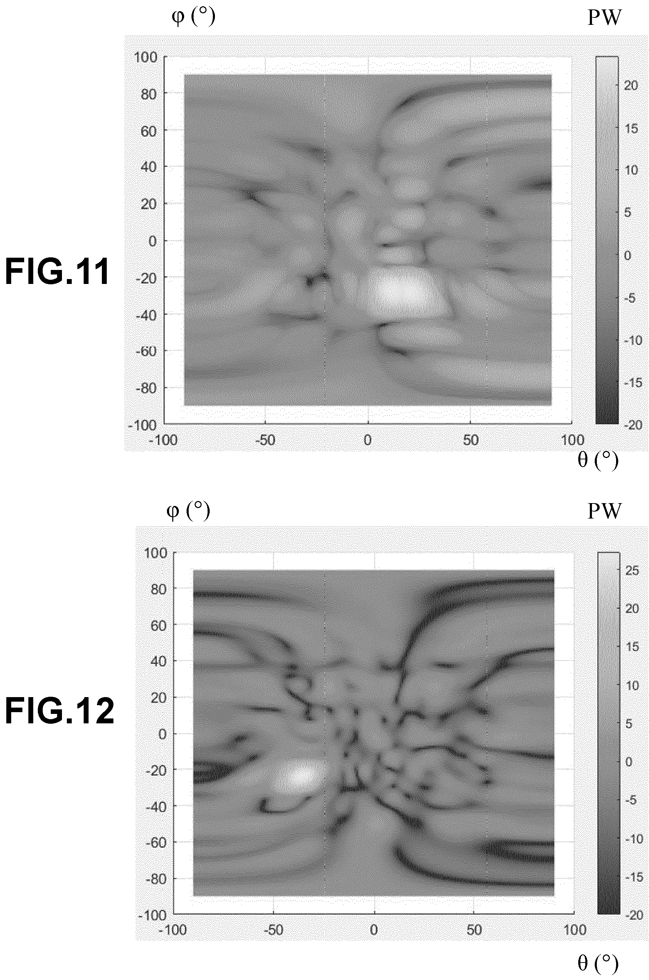

La figure 10 et la figure 11, obtenues par simulation, représentent la puissance électromagnétique PW reçue par le premier équipement utilisateur (figure 10) et par le deuxième équipement utilisateur (figure 11) à la deuxième phase de balayage du mode de réalisation du procédé de sélection de faisceaux illustré sur la figure 6.

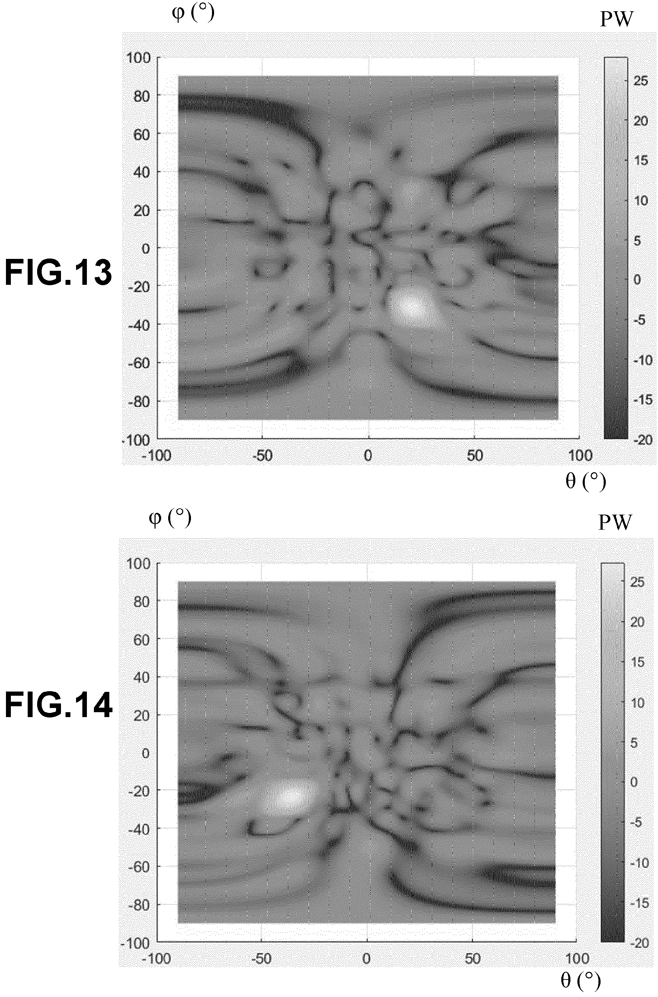

La figure 12 et la figure 13, obtenues par simulation, représentent la puissance électromagnétique PW reçue par le premier équipement utilisateur (figure 12) et par le deuxième équipement utilisateur (figure 13) à la deuxième phase de balayage du mode de réalisation du procédé de sélection de faisceaux illustré sur la figure 7.

La figure 14 et la figure 15, obtenues par simulation, représentent la puissance électromagnétique PW reçue par le premier équipement utilisateur (figure 14) et par le deuxième équipement utilisateur (figure 15) pour un procédé de sélection de faisceaux comprenant le balayage directionnel exhaustif par chaque sous-ensemble Sub-RIS₁ et Sub-RIS₂ de tous les faisceaux à largeur de faisceau petite B_{s,r,i,j} où s est dans la plage allant de 1 à P, r est dans la plage de 1 à O, i est dans la plage allant de 1 à N, et j est égal à 1 pour le premier sous-ensemble Sub-RIS₁ et est égal à 2 pour le deuxième sous-ensemble Sub-RIS₂. La figure 14 est sensiblement identique à la figure 12, ce qui illustre que le faisceau à largeur de faisceau petite pointant vers le premier équipement utilisateur obtenu par le procédé de sélection de faisceaux selon le mode de réalisation décrit précédemment en relation avec les figures 8, 10, et 12 est le même que le faisceau à largeur de faisceau petite pointant vers l'équipement utilisateur obtenu par le procédé de sélection par balayage directionnel exhaustif. De même, la figure 15 est sensiblement identique à la figure 13, ce qui illustre que le faisceau à largeur de faisceau petite pointant vers le deuxième équipement utilisateur obtenu par le procédé de sélection de faisceaux selon le mode de réalisation décrit précédemment en relation avec les figures 9, 11, et 13 est le même que le faisceau à largeur de faisceau petite pointant vers le deuxième équipement utilisateur obtenu par le procédé de sélection par balayage directionnel exhaustif.

Des essais ont été réalisés pour comparer le nombre d'étapes d'émission de faisceaux nécessaires lors de la mise en oeuvre du procédé PI de sélection de faisceaux selon le mode de réalisation illustré sur la figure 5, la figure 6, et la figure 7 avec le nombre d'étapes d'émission de faisceaux nécessaires lors de la mise en oeuvre d'un premier procédé de sélection de faisceaux de comparaison PC1 et d'un deuxième procédé de sélection de faisceaux de comparaison PC2. Le premier procédé de comparaison PC1 correspond au procédé de sélection par balayage directionnel exhaustif. Le deuxième procédé de comparaison PC2 correspond à un procédé de sélection par balayage itératif.

La figure 16, la figure 17, et la figure 18 représentent chacune le nombre Z d'étapes nécessaires lors de la mise en oeuvre du procédé de sélection de faisceaux selon le mode de réalisation illustré sur la figure 5, la figure 6, et la figure 7, lors de la mise en oeuvre du procédé PI de sélection de faisceaux selon le mode de réalisation illustré sur la figure 5, la figure 6, et la figure 7, du premier procédé de comparaison PC1, et du deuxième procédé de comparaison PC2 pour un réseau d'antennes à sources multiples 10 comprenant des sous-ensembles Sub-RISⱼ d'antennes élémentaires 12 en fonction du nombre NA qui correspond à la racine carrée du nombre d'antennes élémentaires 12 de chaque sous-ensemble Sub-RISⱼ d'antennes élémentaires 12.

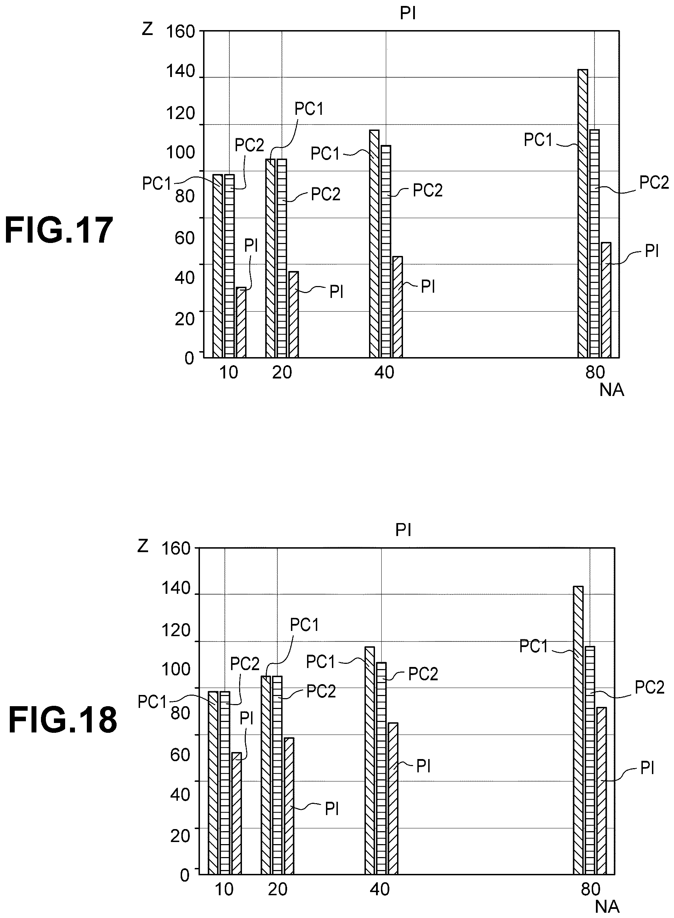

En figure 16, le réseau d'antennes à sources multiples 10 comprend deux sous-ensembles Sub-RISⱼ d'antennes élémentaires 12. En figure 17, le réseau d'antennes à sources multiples 10 comprend quatre sous-ensembles Sub-RISⱼ d'antennes élémentaires 12. En figure 18, le réseau d'antennes à sources multiples 10 comprend huit sous-ensembles Sub-RISⱼ d'antennes élémentaires 12.

Les figures 16, 17, et 18 montrent que le nombre d'étapes d'émission de faisceaux du procédé PI de sélection de faisceaux selon le mode de réalisation illustré sur la figure 5, la figure 6, et la figure 7, est inférieur au nombre d'étapes d'émission de faisceaux du premier procédé de comparaison PC1, et au nombre d'étapes d'émission de faisceaux du deuxième procédé de comparaison PC2.

Les figures 16, 17, et 18 permette de comparer les performances de trois procédés de sélection différentes. Les graphiques montrent le nombre d'étapes nécessaires pour trouver le meilleur faisceau avec un nombre variable d'équipements utilisateur et un nombre variable de sous-ensembles Sub-RISⱼ d'antennes élémentaires 12.

Dans le scénario avec deux équipements utilisateur (figure 16), le nombre d'étapes nécessaires à l'optimisation du faisceau est présenté pour différents nombres NA qui correspond à la racine carrée du nombre d'antennes élémentaires 12 par sous-ensemble Sub-RISⱼ (10, 20, 40 et 80) (ce qui correspond à 100, 400, 1600 et 6400 antennes élémentaires 12 par sous-ensemble Sub-RISⱼ). Le procédé de sélection selon le présent mode de réalisation présente le moins d'étapes dans toutes les configurations de nombre de sous-ensembles Sub-RISⱼ, ce qui indique un procédé de sélection de faisceau efficace. Le procédé de sélection par balayage directionnel exhaustif nécessite généralement plus d'étapes, reflétant la nature structurée du balayage et du raffinement du faisceau. Le procédé de sélection par balayage itératif se situe entre les deux, montrant une efficacité améliorée par rapport au procédé de sélection par balayage directionnel exhaustif mais une réduction des étapes pas aussi importante que le procédé de sélection selon le présent mode de réalisation.

Dans le cas de 4 équipements utilisateur, la figure 17 montre une augmentation du nombre d'étapes pour tous les procédés par rapport au scénario à deux équipements utilisateur, ce qui est attendu car un plus grand nombre d'équipements utilisateur introduisent généralement plus de complexité dans le système. Le procédé de sélection selon le présent mode de réalisation démontre à nouveau le plus petit nombre d'étapes nécessaires à l'optimisation.

Dans un environnement réseau plus complexe avec équipements utilisateur, la tendance à l'augmentation des étapes pour l'optimisation du faisceau avec davantage de sous-ensembles Sub-RISⱼ d'antennes élémentaires 12 est évidente pour toutes les méthodes. La figure 18 montre que le procédé de sélection selon le présent mode de réalisation nécessite systématiquement le moins d'étapes, ce qui montre une robustesse à la complexité supplémentaire de nombreuses connexions d'équipements utilisateur simultanées. Cela reflète la capacité du procédé de sélection selon le présent mode de réalisation à gérer efficacement un environnement utilisateur dense. En comparaison, les procédés de sélection par balayage directionnel exhaustif et par balayage itératif nécessitent un nombre d'étapes significativement plus élevé, le procédé de sélection par balayage directionnel exhaustif affichant les chiffres les plus élevés. Cela indique qu'à mesure que le nombre d'équipements utilisateur augmente, les avantages du procédé de sélection selon le présent mode de réalisation en matière de réduction des étapes d'optimisation deviennent plus prononcés, ce qui se traduit par de meilleures performances dans les zones à haute densité d'utilisateurs.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation e variantes décrits est à la portée de la personne du métier à partir des indications fonctionnelles données ci-dessus.

## Revendications

1. Procédé de sélection de faisceaux d'une station de base (BS) vers des équipements utilisateur (UE1, UE2), la station de base (BS) comprenant un réseau d'antennes à sources multiples comprenant des sous-ensembles (Sub-RIS₁, Sub-RIS₂) d'antennes élémentaires (12), le procédé comprenant les étapes suivantes :
a) émission, par chaque sous-ensemble (Sub-RIS₁, Sub-RIS₂) d'antennes élémentaires (12), à des étapes d'émission successives, d'un faisceau, tous les faisceaux ayant la même largeur de faisceau, et, pour chaque sous-ensemble (Sub-RIS₁, Sub-RIS₂) d'antennes élémentaires (12), tous les faisceaux émis par ledit sous-ensemble (Sub-RIS₁, Sub-RIS₂) d'antennes élémentaires (12) pointant dans des directions différentes entre elles et différentes des directions des faisceaux émis par chaque autre sous-ensemble (Sub-RIS₁, Sub-RIS₂) d'antennes élémentaires (12) ; et
b) réception par la station de base (BS) d'un signal émis par chaque équipement utilisateur (UE1, UE2) indiquant à quelle étape d'émission parmi les étapes d'émission a été reçu le faisceau de puissance maximale par ledit équipement utilisateur (UE1, UE2).

2. Procédé selon la revendication 1, dans lequel les étapes a) et b) sont répétées jusqu'à une dernière mise en oeuvre, la largeur des faisceaux émis à la deuxième mise en oeuvre de l'étape a) étant inférieure à la largeur des faisceaux émis à la première mise en oeuvre de l'étape a).

3. Procédé selon la revendication 2, dans lequel, à la deuxième mise en oeuvre de l'étape a), les faisceaux émis sont inclus dans les faisceaux émis à la première mise en oeuvre de l'étape a) et indiqués par les signaux émis par les équipements utilisateur à la première mise en oeuvre de l'étape b).

4. Procédé selon la revendication 2 ou 3, comprenant, après la dernière mise en oeuvre de l'étape b), une étape c) d'émission successivement par chaque sous-ensemble (Sub-RIS₁, Sub-RIS₂) d'antennes élémentaires (12) de faisceaux ayant la même largeur de faisceau, et, pour chaque sous-ensemble (Sub-RIS₁, Sub-RIS₂) d'antennes élémentaires (12), tous les faisceaux émis par ledit sous-ensemble (Sub-RIS₁, Sub-RIS₂) d'antennes élémentaires (12) pointant dans des directions différentes entre elles et différentes des directions des faisceaux émis par chaque autre sous-ensemble (Sub-RIS₁, Sub-RIS₂) d'antennes élémentaires (12).

5. Procédé selon la revendication 4, dans lequel la largeur des faisceaux émis à l'étape c) est inférieure à la largeur des faisceaux émis à la dernière mise en oeuvre de l'étape a).

6. Procédé selon la revendication 5, dans lequel, à l'étape c), les faisceaux émis sont inclus dans les faisceaux émis à la dernière mise en oeuvre de l'étape a) et indiqués par les signaux émis par les équipements utilisateur à la dernière mise en oeuvre de l'étape b).

7. Procédé selon l'une quelconque des revendications 1 à 6, dans lequel les étapes d'émission comprennent une succession de premières étapes d'émission et une succession de deuxièmes étapes d'émission, le procédé comprenant les étapes suivantes :
- émission, par chaque sous-ensemble (Sub-RIS₁, Sub-RIS₂) d'antennes élémentaires (12), à chaque première étape d'émission de la succession de premières étapes d'émission, d'un premier faisceau pointant dans une première direction et ayant une première largeur de faisceau, tous les premiers faisceaux ayant la même première largeur de faisceau, et, pour chaque sous-ensemble (Sub-RIS₁, Sub-RIS₂) d'antennes élémentaires (12), tous les premiers faisceaux émis par ledit sous-ensemble (Sub-RIS₁, Sub-RIS₂) d'antennes élémentaires (12) pointant dans des premières directions différentes entre elles et différentes des premières directions des premiers faisceaux émis par chaque autre sous-ensemble (Sub-RIS₁, Sub-RIS₂) d'antennes élémentaires (12) ;
- réception par la station de base (BS) d'un premier signal émis par chaque équipement utilisateur (UE1, UE2) indiquant à quelle première étape d'émission, appelé première étape d'émission de maximum, parmi les premières étapes d'émission a été reçu le premier faisceau de puissance maximale par ledit équipement utilisateur (UE1, UE2) ;
- émission, par chaque sous-ensemble (Sub-RIS₁, Sub-RIS₂) d'antennes élémentaires (12), à chaque deuxième étape d'émission de la succession de deuxièmes étapes d'émission, d'un deuxième faisceau pointant dans une deuxième direction et ayant une deuxième largeur de faisceau inférieure à la première largeur de faisceau, tous les deuxièmes faisceaux ayant la même deuxième largeur de faisceau, et, pour chaque sous-ensemble (Sub-RIS₁, Sub-RIS₂) d'antennes élémentaires (12), tous les deuxièmes faisceaux émis par ledit sous-ensemble (Sub-RIS₁, Sub-RIS₂) d'antennes élémentaires (12) étant inclus dans les premiers faisceaux émis aux premières étapes d'émission de maximum, pointant selon des deuxièmes directions différentes entre elles et différentes des deuxièmes directions des deuxièmes faisceaux émis par chaque autre sous-ensemble (Sub-RIS₁, Sub-RIS₂) d'antennes élémentaires (12) ; et
- réception par la station de base (BS) d'un deuxième signal émis par chaque équipement utilisateur (UE1, UE2) indiquant à quelle deuxième étape d'émission, appelée deuxième d'émission étape de maximum, parmi les deuxièmes étapes d'émission a été reçu le deuxième faisceau de puissance maximale par ledit équipement utilisateur (UE1, UE2).

8. Procédé selon la revendication 7, dans lequel les étapes d'émission comprennent en outre une succession de troisièmes étapes d'émission, le procédé comprenant en outre les étapes suivantes :
- émission, successivement pour chaque deuxième faisceau émis aux deuxièmes étapes d'émission de maximum, par le sous-ensemble (Sub-RIS₁, Sub-RIS₂) d'antennes élémentaires (12) ayant émis ledit deuxième faisceau, à chaque troisième étape d'émission de la succession de troisièmes étapes d'émission, de troisièmes faisceaux pointant dans des troisièmes directions et ayant une troisième largeur de faisceau inférieure à la deuxième largeur de faisceau, tous les troisièmes faisceaux ayant la même troisième largeur de faisceau, et tous les troisièmes faisceaux émis par ledit sous-ensemble (Sub-RIS₁, Sub-RIS₂) d'antennes élémentaires (12) étant inclus dans ledit deuxième faisceau, les troisièmes faisceaux pointant selon des troisièmes directions différentes entre elles et différentes des troisièmes directions des troisièmes faisceaux émis par chaque autre sous-ensemble (Sub-RIS₁, Sub-RIS₂) d'antennes élémentaires (12) ;et
- réception par la station de base (BS) d'un troisième signal émis par chaque équipement utilisateur (UE1, UE2) indiquant à quelle troisième étape d'émission, appelée troisième étape d'émission de maximum, parmi les troisièmes étapes d'émission a été reçu le troisième faisceau de puissance maximale par ledit équipement utilisateur (UE1, UE2).

9. Station de base (BS) comprenant un réseau d'antennes à sources multiples comprenant des sous-ensembles (Sub-RIS₁, Sub-RIS₂) d'antennes élémentaires (12), la station de base étant configurée pour mettre en oeuvre un procédé de sélection de faisceaux vers des équipements utilisateur (UE1, UE2) comprenant la répétition des étapes suivantes :
- émission, par chaque sous-ensemble (Sub-RIS₁, Sub-RIS₂) d'antennes élémentaires (12), à des étapes d'émission successives, d'un faisceau, tous les faisceaux ayant la même largeur de faisceau, et, pour chaque sous-ensemble (Sub-RIS₁, Sub-RIS₂) d'antennes élémentaires (12), tous les faisceaux émis par ledit sous-ensemble (Sub-RIS₁, Sub-RIS₂) d'antennes élémentaires (12) pointant dans des directions différentes entre elles et différentes des directions des faisceaux émis par chaque autre sous-ensemble (Sub-RIS₁, Sub-RIS₂) d'antennes élémentaires (12) ; et
- réception d'un signal de chaque équipement utilisateur (UE1, UE2) indiquant à quelle étape d'émission parmi les étapes d'émission a été reçu le faisceau de puissance maximale par ledit équipement utilisateur (UE1, UE2).
